(19) Europäisches Patentamt
European Patent Office
Office européen des brevets

(11) **EP 4 539 152 A1**

(12) **EUROPEAN PATENT APPLICATION**
published in accordance with Art. 153(4) EPC

(43) Date of publication:
**16.04.2025 Bulletin 2025/16**

(21) Application number: **23903984.5**

(22) Date of filing: **13.12.2023**

(51) International Patent Classification (IPC):
*H01M 4/139* (2010.01)   *H01M 4/04* (2006.01)
*H01M 4/1395* (2010.01)   *H01M 4/1391* (2010.01)
*H01M 4/38* (2006.01)   *H01M 4/48* (2010.01)
*H01M 4/525* (2010.01)   *H01M 4/58* (2010.01)

(52) Cooperative Patent Classification (CPC):
**H01M 4/04; H01M 4/139; H01M 4/1391;**
**H01M 4/1395; H01M 4/38; H01M 4/48;**
**H01M 4/525; H01M 4/58;** Y02E 60/10

(86) International application number:
**PCT/KR2023/020497**

(87) International publication number:
**WO 2024/128783 (20.06.2024 Gazette 2024/25)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **15.12.2022 KR 20220175738**

(71) Applicant: **LG Energy Solution, Ltd.**
**Seoul 07335 (KR)**

(72) Inventors:
• **LEE, Ilha**
**Daejeon 34122 (KR)**
• **JOO, Mun Kyu**
**Daejeon 34122 (KR)**
• **KOO, Daeryung**
**Daejeon 34122 (KR)**
• **CHOI, Seong Won**
**Daejeon 34122 (KR)**
• **KWON, Yohan**
**Daejeon 34122 (KR)**
• **CHAE, Jonghyun**
**Daejeon 34122 (KR)**

(74) Representative: **Hoffmann Eitle**
**Patent- und Rechtsanwälte PartmbB**
**Arabellastraße 30**
**81925 München (DE)**

(54) **TRANSFER LAMINATE, METHOD FOR MANUFACTURING TRANSFER LAMINATE, METHOD FOR MANUFACTURING ELECTRODE FOR LITHIUM SECONDARY BATTERY, AND LITHIUM SECONDARY BATTERY**

(57) The present application relates to a transfer laminate, a method for manufacturing a transfer laminate, a method for manufacturing an electrode for a lithium secondary battery, and a lithium secondary battery, including a prelithiation process in which a lithium metal layer is easily transferred by controlling the ratio of lithium elements and oxygen elements on the surface and in a specific region of a lithium metal layer by controlling the temperature of a base material layer.

[Figure 1]

**Description**

[Technical Field]

This application claims priority to and the benefit of Korean Patent Application No. 10-2022-0175738 filed in the Korean Intellectual Property Office on December 15, 2022, the entire contents of which are incorporated herein by reference.

The present application relates to a transfer laminate, a method for manufacturing a transfer laminate, a method for manufacturing an electrode for a lithium secondary battery, and a lithium secondary battery.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte solution, and a separator. The negative electrode includes a negative electrode active material for intercalating and deintercalating lithium ions coming out from the positive electrode, and silicon-based particles having a high discharge capacity may be used as the negative electrode active material.

In general, a carbon material such as graphite is used for a negative electrode of a lithium secondary battery, but the theoretical capacity density of carbon is 372 mAh/g (833 mAh/cm$^3$). Therefore, in order to improve the energy density of the negative electrode, silicon (Si), tin (Sn), and oxides and alloys thereof, which are alloyed with lithium, are considered as negative electrode materials. Among them, silicon-based materials have attracted attention due to their low cost and high capacity (4200 mAh/g).

However, when a silicon-based negative electrode active material is used, a problem arises in that the initial irreversible capacity is large. In the charging and discharging reactions of the lithium secondary battery, lithium discharged from the positive electrode is intercalated into the negative electrode during charging, and is deintercalated from the negative electrode to return to the positive electrode again during discharging. In the case of the silicon-based negative electrode active material, the volume change and the surface side reaction are severe, so that a large amount of lithium intercalated in the negative electrode during initial charging does not return to the positive electrode again, and thus an initial irreversible capacity increases. When the initial irreversible capacity increases, there occurs a problem that the battery capacity and the cycle are rapidly reduced.

In order to solve the above problems, known is a method for pre-lithiating a silicon negative electrode including a silicon-based negative electrode active material. As the pre-lithiation method, known methods include a method of manufacturing an electrode after lithiation by a physicochemical method such as electrolytic plating, lithium metal transfer, and lithium metal deposition, a method of electrochemically pre-lithiating a negative electrode, and the like.

In order to use the existing electrochemical method, the wet process should be performed within the electrolyte, which poses risks such as fire and explosion, so it was necessary to control an inert environment well. That is, when creating the environment, it is difficult to control conditions such as moisture control by using inert gas in a room where the electrochemical method is performed. In addition, in order to uniformly control the initial irreversible capacity, a rate of pre-lithiation should be slowed down as much as possible using an electrochemical method, so a problem arises in that the production cost increases in the application of the electrochemical method.

In a lithium metal transfer process that is a different method, it is difficult to transfer lithium metal safely and easily, and lithium is not transferred from a transfer laminate, or even if lithium metal is transferred, the highly reactive lithium metal immediately starts reacting with a negative electrode active material, thereby causing problems such as particle breakage on a surface of the negative electrode active material layer.

In particular, in the transfer-type pre-lithiation process, it is important to secure transferability of a lithium metal layer, and application for mass production is possible only when the transferability is secured. Research is underway to easily transfer the lithium metal layer from the transfer laminate, but a method of transferring the lithium metal layer more safely and faster has not been found yet.

Therefore, there is a need for research on a transfer laminate that can enable lithium to be uniformly pre-lithiated in an electrode active material layer more safely and efficiently when pre-lithiating an electrode.

Prior Art Document

(Patent Literature 1) Japanese Patent Application Publication No. 2009-080971

[Detailed Description of the Invention]

[Technical Problem]

In the transfer-type pre-lithiation process, a technology that can easily transfer a lithium metal layer on top of an electrode active material layer is essential. Accordingly, methods such as including a release layer or controlling adhesive force were studied, but could not solve clearly the above-described problems. In the present application, it was found through research that when a temperature of a base material layer is adjusted in a process of forming a lithium metal layer on the base material layer, a ratio of a lithium element and an oxygen element in a surface and a specific region of the lithium metal layer can be adjusted and that when the ratio is adjusted, the lithium metal layer can be easily transferred.

Accordingly, the present application relates to a transfer laminate, a method for manufacturing a transfer laminate, a method for manufacturing an electrode for a lithium secondary battery, and a lithium secondary battery.

[Technical Solution]

An exemplary embodiment of the present specification provides a transfer laminate including a base material layer; and a lithium metal layer stacked on one surface or both surfaces of the base material layer, wherein a thickness of the lithium metal layer is 1 $\mu$m or greater and 20 $\mu$m or less, and wherein a first region including a thickness of 1 nm or greater and 500 nm and less based on a surface of the lithium metal layer opposite to a surface facing the base material layer satisfies Formula 1 below.

$$[\text{Formula 1}]$$

$$X/Y \times 100 \ (\%) \ \leq \ 95$$

in Formula 1 above,

X refers to an oxygen element ratio (at%) based on 100 of an element content in the first region, and
Y refers to a lithium element ratio (at%) based on 100 of the element content in the first region.

Another exemplary embodiment provides a method for manufacturing a transfer laminate including: preparing a base material layer; and forming a lithium metal layer on one surface of the base material layer by heating and depositing a lithium source, wherein a surface temperature of the base material layer in the step of forming of the lithium metal layer is 90°C or lower.

Still another exemplary embodiment provides a method for manufacturing an electrode for a lithium secondary battery, the method including: forming an electrode current collector layer and an electrode active material layer on one surface or both surfaces of the electrode current collector layer; and transferring a lithium metal layer onto the electrode active material layer, wherein the transferring of lithium metal layer includes preparing the transfer laminate according to the present application, laminating the transfer laminate onto the electrode active material layer such that a surface of the lithium metal layer opposite to a surface facing the base material layer comes into contact with a surface of the electrode active material layer opposite to a surface in contact with the electrode current collector layer, and removing the base material layer.

Finally, provided is a lithium secondary battery including: a positive electrode for a lithium secondary battery; a negative electrode for a lithium secondary battery; a separator provided between the positive electrode and the negative electrode; and an electrolyte, wherein at least one of the positive electrode for a lithium secondary battery and the negative electrode for a lithium secondary battery is the electrode for a lithium secondary battery manufactured according to the method described above.

[Advantageous Effects]

The transfer laminate according to an exemplary embodiment of the present invention is a transfer laminate that is used in a transfer-type pre-lithiation process. In particular, the transfer laminate includes the lithium metal layer formed on the top of the base material layer by heating and depositing a lithium source. In this case, the surface temperature of the base material layer in the step of forming the lithium metal layer is adjusted to 90°C or lower.

According to the characteristics of the manufacturing method as described above, the transfer laminate according to the present application satisfies the range of Formula 1 above in the first region including the thickness of 1 nm or greater and 500 nm and less based on the surface of the lithium metal layer opposite to the surface facing the base material layer.

In the transfer laminate, the composition near the surface of the lithium metal layer satisfies the range of Formula 1 above, so it is possible to ensure transferability when transferring the lithium metal layer to an electrode later by adjusting the ratio of oxygen in the surface of the lithium metal layer. That is, the surface of the lithium metal layer ultimately comes into contact with a surface of a transfer target to which the lithium metal layer is transferred, and in this case, by adjusting the ratio of oxygen in the surface, the reactivity issue with the transfer target and the transfer force can be adjusted during transfer, so productivity is secured and transferability can be improved in R2R-type pre-lithiation.

That is, the transfer laminate according to the present application has the adjusted composition of the lithium metal layer. Accordingly, the lithium transferability during the pre-lithiation process can be improved, resulting in suppression of generation of by-products during the pre-lithiation.

[Brief Description of Drawings]

FIG. 1 shows a transfer laminate according to an exemplary embodiment of the present application.

FIG. 2 shows a process of transferring lithium metal to an electrode for a lithium secondary battery according to an exemplary embodiment of the present application.

FIG. 3 shows a stacked structure of a lithium secondary battery according to an exemplary embodiment of the present application.

FIG. 4 shows an XPS analysis result for a transfer laminate according to Example 1 of the present application.

FIG. 5 shows an XPS analysis result for a transfer laminate according to Example 2 of the present application.

FIG. 6 shows an XPS analysis result for a transfer laminate according to Example 3 of the present application.

FIG. 7 shows an XPS analysis result for a transfer laminate according to Comparative Example 1 of the present application.

FIG. 8 shows a transfer force evaluation result for the transfer laminate according to Comparative Example 1 of the present application.

FIG. 9 shows a transfer force evaluation result for the transfer laminate according to Example 3 of the present application.

<Explanation of Reference Numerals and Symbols>

10:     base material layer
20:     lithium metal layer
30:     electrode active material layer
35:     release layer
40:     electrode current collector layer
50:     separator
60:     electrode current collector layer
70:     electrode active material layer
100:    transfer laminate
200:    electrode for lithium secondary battery
300:    electrode for lithium secondary battery
A1:     first region
A2:     second region

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount at a liquid nitrogen temperature (77K) by using BELSORP-mini II available from BEL Japan, Inc. That is, in the present application, the BET specific surface area may refer to the specific surface area measured by the above measurement method.

In the present specification, "Dn" means an average particle diameter, and means a particle diameter at the n% point in the cumulative distribution of the number of particles according to the particle diameter. That is, D50 is a particle diameter at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the average particle diameter may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a transfer laminate including a base material layer; and a lithium metal layer stacked on one surface or both surfaces of the base material layer, wherein a thickness of the lithium metal layer is 1 $\mu$m or greater and 20 $\mu$m or less, and wherein a first region including a thickness of 1 nm or greater and 500 nm and less based on a surface of the lithium metal layer opposite to a surface facing the base material layer satisfies Formula 1 below.

[Formula 1]

$$X/Y \times 100 \ (\%) \leq 95$$

in Formula 1 above,

X refers to an oxygen element ratio (at%) based on 100 of an element content in the first region, and
Y refers to a lithium element ratio (at%) based on 100 of the element content in the first region.

In the transfer laminate according to the present invention, the composition near the surface of the lithium metal layer satisfies the range of Formula 1 above, so it is possible to ensure transferability when transferring the lithium metal layer to an electrode later by adjusting the ratio of oxygen in the surface of the lithium metal layer. That is, the surface of the lithium metal layer ultimately comes into contact with a surface of a transfer target to which the lithium metal layer is transferred, and in this case, by adjusting the ratio of oxygen in the surface, the reactivity issue with the transfer target and the transfer force can be adjusted during transfer, so productivity is secured and transferability can be improved in R2R-type pre-lithiation.

In an exemplary embodiment of the present application, the base material layer can be used without limitation as long as it has features capable of withstanding process conditions such as high temperature in the step of depositing the lithium metal layer and preventing a reverse peeling problem that the lithium metal layer is transferred onto the base material layer during a winding process for transferring the deposited lithium metal.

Specifically, in an exemplary embodiment of the present application, the base material layer may be one or more selected from the group consisting of polyethylene terephthalate (PET), polyimide (PI), poly(methylmethacrylate) (PMMA), polypropylene, polyethylene and polycarbonate.

In an exemplary embodiment of the present application, a thickness of the base material layer may be 1 $\mu$m or greater and 300 $\mu$m or less, and may satisfy a range of 5 $\mu$m or greater and 200 $\mu$m or less, and 10 $\mu$m or greater and 100 $\mu$m or less.

In an exemplary embodiment of the present application, a thickness of the lithium metal layer may be 1 $\mu$m or greater and 50 $\mu$m or less, and may satisfy a range of 3 $\mu$m or greater and 25 $\mu$m or less.

As the thickness of the base material layer satisfies the above range, transfer of the lithium metal layer to the electrode active material layer can occur efficiently, and in particular, when the base material layer has the above range, heat dissipation can occur effectively, resulting in preventing problems of reverse transfer and generation of by-products during pre-lithiation.

In an exemplary embodiment of the present application, a release layer may be further included on a surface in contact with the base material layer and the lithium metal layer of the transfer laminate, in order to improve the peelability of the lithium metal layer, to secure transferability to the electrode active material layer and to serve as a protective layer after transfer of the lithium metal layer.

That is, the base material layer may have a release layer formed on at least one surface, or may have release layers formed on both surfaces. The release layer makes it possible to prevent a reverse peeling problem that the lithium metal layer is transferred onto the base material layer during a winding process for transferring the deposited lithium metal layer to an electrode, and also makes it possible to easily separate the base material layer after transferring lithium metal onto the electrode active material layer.

In an exemplary embodiment of the present application, a thickness of the release layer may be 1 nm or greater and 1 $\mu$m or less.

In another exemplary embodiment, the thickness of the release layer may satisfy a range of 1 nm or greater and 1 $\mu$m or less, preferably 100 nm or greater and 1 $\mu$m or less, and more preferably 500 nm or greater and 1 $\mu$m or less.

The release layer satisfies the above thickness range and satisfies a specific adhesive force range. The release layer has the above thickness range, so that a range of adhesive force with an upper part of the pre-lithiated electrode after pre-lithiation can be adjusted to a lower limit of a certain range, and therefore, side reactions between the release layer and the electrode active material layer are prevented.

The release layer may include one or more species selected from the group consisting of silicon-modified polyester in which a silicon chain is graft-linked to a polyester main chain, an acrylic resin, Si, melamine, and fluorine.

In an exemplary embodiment of the present application, the release layer may be formed by a coating method. For example, the coating method may be a method selected from the group consisting of dip coating, spray coating, spin coating, die coating, gravure coating, micro-gravure coating, comma coating, and roll coating, but is not limited thereto. That is, various coating methods that can be used to form a coating layer in the art can be used.

In an exemplary embodiment of the present application, the release layer may include polymethyl methacrylate (PMMA).

As regards the type of release layer, any release layer used in the art can be used without limitation as long as it satisfies its role.

In an exemplary embodiment of the present application, a thickness of the lithium metal layer may be 1 $\mu$m or greater and 20 $\mu$m or less.

In another exemplary embodiment, the thickness of the lithium metal layer may be 1 $\mu$m or greater and 20 $\mu$m or less, preferably 2 $\mu$m or greater and 15 $\mu$m or less, and more preferably 3 $\mu$m or greater and 10 $\mu$m or less.

In an exemplary embodiment of the present application, the first region including a thickness of 1 nm or greater and 10 nm or less based on the surface of the lithium metal layer opposite to a surface facing the base material layer may satisfy Formula 1 above.

The transfer laminate used in transfer-type pre-lithiation has a lithium metal layer having the above thickness range formed on the top of the base material layer by heating and depositing a lithium source using thermal evaporation. Thereafter, an inert gas is used to stabilize the surface and to form a partial deposited film on the top. During the deposition process, oxygen may be incorporated into the deposited film. In this case, it was found in the present application ratios of oxygen and lithium in the surface of the lithium metal layer can be adjusted by adjusting a temperature range of the base material layer during lithium metal deposition, and when the ratios are adjusted to the range of Formula 1 above, transfer of the lithium metal layer can occur efficiently.

In an exemplary embodiment of the present application, Formula 1 above may be X/Y x 100 (%) $\leq$ 95, specifically X/Y x 100 (%) $\leq$ 90, and more specifically X/Y x 100 (%) $\leq$ 89.

In an exemplary embodiment of the present application, Formula 1 above may be 50 $\leq$ X/Y x 100(%), specifically 60 $\leq$ X/Y x 100(%), and more specifically 70 $\leq$ X/Y x 100(%).

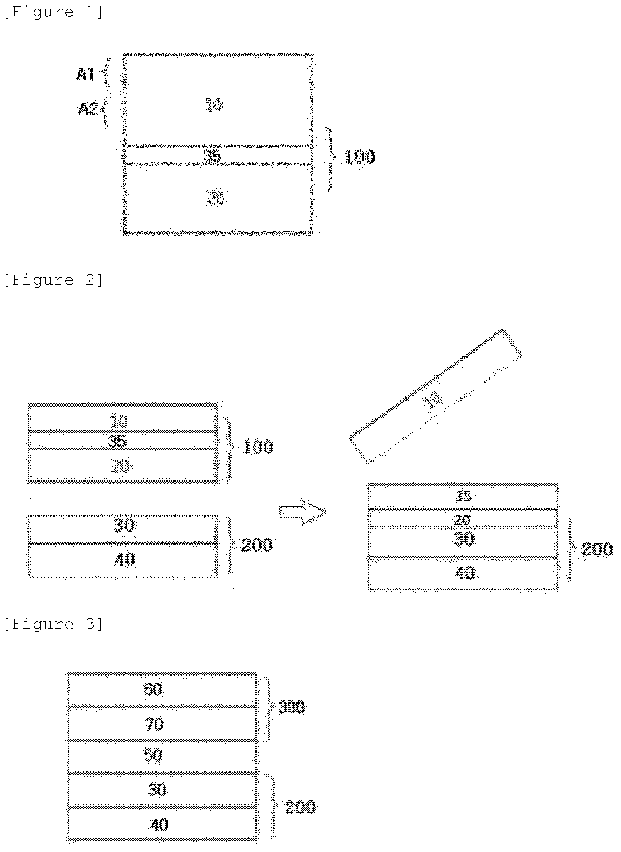

FIG. 1 shows a transfer laminate according to an exemplary embodiment of the present application. Specifically, it can be confirmed that a lithium metal layer 10 is stacked on the top of a base material layer 20, which corresponds to a transfer laminate further including a release layer 35 between the base material layer 20 and the lithium metal layer 10. In particular, a first region A1 includes a thickness of 1 nm or greater and 500 nm or less based on a surface of the lithium metal layer opposite to a surface facing the base material layer, and may refer to a region including 1 nm or greater and 500 nm or less based on the surface of the lithium metal layer.

In an exemplary embodiment of the present application, the first region of the lithium metal layer may be represented as a region according to XPS component analysis (depth profile). Specifically, the first region of the lithium metal layer may refer to a region at a position of a thickness of 10 seconds (from top of the film).

The XPS component analysis refers to a method of obtaining a survey scan spectrum of an as-received sample and then obtaining a narrow scan spectrum while progressing depth profile. Specifically, monatomic Ar ion was used for up to 4000 seconds, and elemental ratios can be calculated from the narrow scan spectrum.

In this case, the first region may mean any region including 1 nm or greater and 500 nm or less, and may mean a region of a surface belonging to 500 nm of the lithium metal layer. In this case, at% of each element was expressed on the basis of 100 at% of elements in the first region.

In an exemplary embodiment of the present application, X may refer to an oxygen element ratio (at%) based on 100 of an element content in the first region. Specifically, X may satisfy 30 at% or more and 41.5 at% or less, preferably 32 at% or more and 41 at% or less, and more preferably 34 at% or more and 41 at% or less.

In an exemplary embodiment of the present application, Y may refer to a lithium element ratio (at%) based on 100 of the element content in the first region. Specifically, Y may satisfy 43 at% or more and 60 at% or less, preferably 43 at% or more and 55 at% or less, and more preferably 43 at% or more and 50 at% or less.

In the transfer laminate according to the present invention, the composition near the surface of the lithium metal layer satisfies the range of Formula 1 above, so it is possible to ensure transferability when transferring the lithium metal layer to an electrode later by adjusting the ratio of oxygen in the surface of the lithium metal layer. That is, by adjusting the ratios to the range of Formula 1 above, the reactivity issue with the transfer target and the transfer force can be adjusted during transfer, so productivity is secured and transferability can be improved in R2R-type pre-lithiation.

In an exemplary embodiment of the present application, there is provided the transfer laminate in which a second region including a thickness of 1500 nm or greater and 1800 nm or less based on the surface of the lithium metal layer opposite to the surface facing the base material layer may satisfy Formula 2 below.

$$[\text{Formula 2}]$$

$$X1/Y1 \times 100 \ (\%) \ \le \ 10$$

in Formula 2 above,

X1 refers to an oxygen element ratio (at%) based on 100 of an element content in the second region, and
Y1 refers to a lithium element ratio (at%) based on 100 of the element content in the second region.

FIG. 1 shows a transfer laminate according to an exemplary embodiment of the present application, in which the second region can be confirmed. Specifically, a second region A2 is a region including a thickness of 1500 nm or greater and 1800 nm or less based on the surface of the lithium metal layer opposite to the surface facing the base material layer, and may refer to a region including 1500 nm or greater and 1800 nm or less based on the surface of the lithium metal layer.

In an exemplary embodiment of the present application, the second region of the lithium metal layer is a region according to XPS component analysis as described above. Specifically, the second region of the lithium metal layer may refer to a region at a position of a thickness of 3000 seconds (from top of the film).

That is, the first region and the second region according to the present application may refer to regions of a depth of 10 seconds and a depth of 3000 seconds according to XPS component analysis, which are applied to the thickness of the lithium metal layer and expressed as thicknesses based on the surface of the lithium metal layer.

In an exemplary embodiment of the present application, Formula 2 above may be $X1/Y1 \times 100 \ (\%) \le 10$, specifically $X1/Y1 \times 100 \ (\%) \le 7$, and more specifically $X1/Y1 \times 100 \ (\%) \le 6.9$.

In an exemplary embodiment of the present application, Formula 2 above may be $1 \le X1/Y1 \times 100 \ (\%)$, specifically $2 \le X1/Y1 \times 100 (\%)$, and more specifically $4 \le X1/Y1 \times 100 (\%)$.

In an exemplary embodiment of the present application, X1 may refer to an oxygen element ratio (at%) based on 100 of an element content in the second region. Specifically, X1 may satisfy 1 at% or more and 10 at% or less, preferably 2 at% or more and 7 at% or less, and more preferably 3 at% or more and 6.5 at% or less.

In an exemplary embodiment of the present application, Y1 may refer to a lithium element ratio (at%) based on 100 of the element content in the second region. Specifically, Y1 may satisfy 90 at% or more and 99 at% or less, preferably 92 at% or more and 98 at% or less, and more preferably 92 at% or more and 97 at% or less.

The second region refers to a region at a position deeper than the first region from the surface of the lithium metal layer. In this case, the ratio in the second region satisfies the above range, including an appropriate ratio of oxygen, so that the problems of ignition and generation of by-products do not occur during subsequent pre-lithiation. In addition, an amount of pre-lithiation is adjusted to an appropriate range, including the lithium element in the above ratio, proceeding with a desired amount of pre-lithiation.

In an exemplary embodiment of the present application, there is provided the transfer laminate in which the lithium element is included in an amount of 90 wt% or more based on 100 of a metal element content in the lithium metal layer.

In another exemplary embodiment, the lithium element may be included in an amount of 90 wt% or more, and preferably 91 wt% or more, and 99 wt% or less, and preferably 95 wt% or less based on 100 of the metal element content in the lithium metal layer.

That is, the lithium metal layer according to the present application includes the maximum lithium element in order to proceed with pre-lithiation, and adjusts the ratio of oxygen within the ranges of Formula 1 and Formula 2 above, respectively. By adjusting the ratio of oxygen as described above, transferability can be improved during pre-lithiation, thereby solving the problem of reverse transfer and suppressing the generation of by-products due to side reactions during pre-lithiation, resulting in an electrode with better performance.

In an exemplary embodiment of the present application, the lithium metal layer may further include other metal impurities in addition to the lithium and oxygen elements described above.

In this case, the metal impurities may be included in an amount of 10 parts by weight or less based on 100 parts by weight of metal element in the lithium metal layer.

The metal impurities may include a carbon (C) element, a nitrogen (N) element, and the like.

Below, specific details of the method for manufacturing a transfer laminate of the present invention will be described.

An exemplary embodiment of the present application provides a method for manufacturing a transfer laminate including: preparing a base material layer; and forming a lithium metal layer on one surface of the base material layer by heating and depositing a lithium source, wherein a surface temperature of the base material layer in the step of forming of the lithium metal layer is 90°C or lower.

In an exemplary embodiment of the present application, the deposition method for depositing the lithium metal layer onto the base material layer may be selected from evaporation deposition, chemical vapor deposition (CVD) and physical vapor deposition, but is not limited thereto, and various deposition methods that are used in the art may be used.

In the present application, there is provided the method for manufacturing a transfer laminate further including forming a surface protective film on top of the lithium metal layer by using a $CO_2$ gas alone or a mixture of an inert gas and a $CO_2$ gas, after forming the lithium metal layer.

The method for manufacturing a transfer laminate according to the present application adjusts the surface temperature of the base material layer in the step of depositing the lithium metal layer as described above to the above-described range, thereby manufacturing a lithium metal layer satisfying the ranges of Formula 1 and Formula 2 described above. That is, it was found that, in the manufacture of a transfer laminate, the composition of the lithium metal layer can be changed if the temperature condition is changed when depositing the lithium metal layer, and a transfer laminate with guaranteed transferability can be manufactured when the temperature condition within the above range is satisfied.

In an exemplary embodiment of the present application, the surface temperature of the base material layer in the step of forming the lithium metal layer may be 90°C or lower and 50°C or higher, preferably 55°C or higher.

In an exemplary embodiment of the present application, the lithium metal layer manufactured according to the above manufacturing method may satisfy Formulas 1 and 2 above.

The descriptions of Formula 1 and Formula 2 are the same as described above.

An exemplary embodiment provides a method for manufacturing an electrode for a lithium secondary battery, the method including: forming an electrode current collector layer and an electrode active material layer on one surface or both surfaces of the electrode current collector layer; and transferring a lithium metal layer onto the electrode active material layer, wherein the transferring of lithium metal layer includes preparing the transfer laminate described above, laminating the transfer laminate onto the electrode active material layer such that a surface of the lithium metal layer opposite to a surface facing the base material layer comes into contact with a surface of the electrode active material layer opposite to a surface in contact with the electrode current collector layer, and removing the base material layer.

FIG. 2 shows a process of transferring lithium metal to an electrode for a lithium secondary battery according to an exemplary embodiment of the present application. Specifically, processes of stacking a transfer laminate 100, in which a base material layer 10, a release layer 35 and a lithium metal layer 20 are sequentially stacked, onto an electrode 200 for a lithium secondary battery formed by an electrode current collector layer 40 and an electrode active material layer 30, and then removing the base material layer 10 of the transfer laminate 100 can be seen. Accordingly, it can be confirmed that the lithium metal layer and the release layer are transferred onto the top of the electrode active material layer.

Below, specific details of the method for manufacturing an electrode for a lithium secondary battery of the present invention will be described.

The method for manufacturing an electrode for a lithium secondary battery according to an exemplary embodiment of the present application may include a step of forming an electrode current collector layer and an electrode active material layer on one surface or both surfaces of the electrode current collector layer.

In an exemplary embodiment of the present application, the electrode may be a negative electrode or a positive electrode.

In an exemplary embodiment of the present application, there is provided the method for manufacturing an electrode for a lithium secondary battery in which the step of forming the electrode current collector layer and the electrode active material layer on one surface or both surfaces of the electrode current collector layer includes a step of coating an electrode slurry including an electrode active material layer composition on one surface or both surfaces of the electrode current collector layer, and in which the electrode active material layer composition includes one or more selected from the group consisting of an electrode active material, an electrode conductive material, and an electrode binder.

In this case, there is provided the pre-lithiation method of an electrode for a lithium secondary battery in which the electrode active material includes a silicon-based active material, and the silicon-based active material includes one or more selected from the group consisting of SiOx (x=0), SiOx (0<x<2), SiC, and a Si alloy.

In an exemplary embodiment of the present application, the electrode may be a negative electrode, and hereinafter, the method for manufacturing a negative electrode for a lithium secondary battery will be described.

The method for manufacturing a negative electrode for a lithium secondary battery according to an exemplary embodiment of the present application may include forming a negative electrode current collector layer and a negative electrode active material layer on one surface or both surfaces of the negative electrode current collector layer.

In an exemplary embodiment of the present application, the negative electrode current collector layer generally has a thickness of 1 $\mu$m to 100 $\mu$m. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present application, the negative electrode current collector layer may have a thickness of 1 $\mu$m or greater and 100 $\mu$m or less, and the negative electrode active material layer may have a thickness of 20 $\mu$m or greater and 500 $\mu$m or less.

However, the thickness may be variously modified depending on a type and a use of negative electrode used, and is not limited thereto.

In an exemplary embodiment of the present application, there is provided the method for manufacturing a negative electrode for a lithium secondary battery in which the step of forming the negative electrode current collector layer and the negative electrode active material layer on one surface or both surfaces of the negative electrode current collector layer includes coating a negative electrode slurry including a negative electrode active material layer composition on one surface or both surfaces of the negative electrode current collector layer, and in which the negative electrode active material layer composition includes one or more selected from the group consisting of a silicon-based active material, a negative electrode conductive material, and a negative electrode binder.

In an exemplary embodiment of the present application, the negative electrode slurry may include a negative electrode active material layer composition and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may refer to a content of the negative electrode active material layer composition included in the negative electrode slurry, and may refer to a content of the negative electrode active material composition on the basis of 100 parts by weight of the negative electrode slurry.

When the solid content of the negative electrode slurry satisfies the above range, the viscosity is appropriate during formation of the negative electrode active material layer, so that particle agglomeration of the negative electrode active material layer composition is minimized to efficiently form the negative electrode active material layer.

In an exemplary embodiment of the present application, the slurry solvent is not limited thereto as long as it can dissolve the negative electrode active material layer composition, but specifically, distilled water may be used.

A negative electrode according to an exemplary embodiment of the present application may be formed by coating and drying the negative electrode slurry on the negative electrode current collector layer.

Through the drying step, the slurry solvent in the negative electrode slurry may be dried.

In an exemplary embodiment of the present application, the negative electrode active material layer composition may include one or more selected from the group consisting of a negative electrode active material, a negative electrode conductive material, and a negative electrode binder.

In an exemplary embodiment of the present application, a silicon-based active material may be used as the negative electrode active material, or a negative electrode including both a silicon-based active material and a carbon-based active material may be used. In this case, a lithium secondary battery with further improved overall performance, such as cycle life characteristics, can be manufactured.

In an exemplary embodiment of the present application, the silicon-based active material may include one or more selected from the group consisting of SiOx (x=0), SiOx (0<x<2), SiC, and a Si alloy.

In an exemplary embodiment of the present application, the silicon-based active material may include one or more selected from the group consisting of SiOx (x=0) and SiOx (0<x<2), and may include the SiOx (x=0) in an amount of 70 parts by weight or more on the basis of 100 parts by weight of the silicon-based active material.

In another exemplary embodiment, SiOx (x=0) may be included in an amount of 70 parts by weight or more, preferably 80 parts by weight or more, and more preferably 90 parts by weight or more, and 100 parts by weight or less, preferably 99 parts by weight or less, and more preferably 95 parts by weight or less on the basis of 100 parts by weight of the silicon-based active material.

In an exemplary embodiment of the present application, for the silicon-based active material, pure silicon (Si) may be particularly used as the silicon-based active material. The use of pure silicon (Si) as the silicon-based active material may mean that, on the basis of 100 parts by weight of the total silicon-based active material as described above, pure Si particles (SiOx (x=0)) not bonded to other particles or elements are included within the above range.

In the charging and discharging reactions of the lithium secondary battery, lithium discharged from the positive electrode is intercalated into the negative electrode during charging, and is deintercalated from the negative electrode to return to the positive electrode again during discharging. In the case of the silicon-based negative electrode active material, the volume change and the surface side reaction are severe, so that a large amount of lithium intercalated in the negative electrode during initial charging does not return to the positive electrode again, resulting in an increase in initial irreversible capacity. When the initial irreversible capacity increases, there occurs a problem that the battery capacity and the cycle are rapidly reduced.

In the present invention, in order to solve the above problems, the negative electrode of the lithium secondary battery is pre-lithiated to solve the initial irreversible capacity problem. Specifically, in the pre-lithiation process, during the lithium transfer process, lithium metal can be easily transferred from a transfer laminate, and generation of by-products is suppressed so that lithium in the negative electrode active material layer can be uniformly pre-lithiated.

Note that an average particle diameter (D50) of the silicon-based active material of the present invention may be 5 μm to 10 um, specifically 5.5 μm to 8 μm, and more specifically 6 μm to 7 μm. When the average particle diameter is within the above range, a specific surface area of the particles is within a suitable range, so that the viscosity of the negative electrode slurry is formed within an appropriate range. Accordingly, the particles constituting the negative electrode slurry are smoothly dispersed. In addition, when the size of the silicon-based active material has a value equal to or greater than the lower limit value of the range, a contact area between the silicon particles and the conductive material is excellent due to the composite made of the conductive material and the binder in the negative electrode slurry, so that a sustaining possibility of the conductive network increases, thereby increasing the capacity retention rate. Note that, when the average particle diameter satisfies the above range, excessively large silicon particles are excluded, so that a surface of the negative electrode is formed smooth. Accordingly, a current density non-uniformity phenomenon during charging and discharging can be prevented.

In an exemplary embodiment of the present application, the silicon-based active material generally has a characteristic BET surface area. The BET surface area of the silicon-based active material is preferably 0.01 to 150.0 m²/g, more preferably 0.1 to 100.0 m²/g, particularly preferably 0.2 to 80.0 m²/g, and most preferably 0.2 to 18.0 m²/g. The BET surface area is measured in accordance with DIN 66131 (using nitrogen).

In an exemplary embodiment of the present application, the silicon-based active material may be present, for example, in a crystalline or amorphous form, and is preferably not porous. The silicon particles are preferably spherical or fragment-shaped particles. Alternatively, but less preferably, the silicon particles may also have a fiber structure or be present in the form of a silicon-containing film or coating.

In an exemplary embodiment of the present application, the silicon-based active material may be included in an amount of 60 parts by weight or more on the basis of 100 parts by weight of the negative electrode active material layer composition.

In another exemplary embodiment, the silicon-based active material may be included in an amount of 60 parts by weight or more, preferably 65 parts by weight or more, and more preferably 70 parts by weight or more, and 95 parts by weight or less, preferably 90 parts by weight or less, and more preferably 80 parts by weight or less on the basis of 100 parts by weight of the negative electrode active material layer composition.

The negative electrode active material layer composition according to the present application includes both a conductive material and a binder capable of controlling the volume expansion rate during charging and discharging even when the silicon-based active material having a significantly high capacity is used within the above range. Accordingly, even when the silicon-based active material is included within the above range, the negative electrode active material layer composition does not degrade performance of the negative electrode and has excellent output characteristics in charging and discharging.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the sphericity (circularity) is determined by Formula 1 below, in which A is an area and P is a boundary line.

$$[\text{Formula } 1]$$

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery. Therefore, a type of negative electrode conductive material that is used together with the silicon-based active material is important.

In an exemplary embodiment of the present application, the negative electrode conductive material may include one or more selected from the group consisting of a point-like conductive material, a planar conductive material and a linear conductive material.

In an exemplary embodiment of the present application, the point-like conductive material refers to a material that may be used so as to improve conductivity of the negative electrode and has conductivity without inducing chemical change. Specifically, the point-like conductive material may be one or more species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 m$^2$/g or greater and 70 m$^2$/g or less, preferably 45 m$^2$/g or greater and 65 m$^2$/g or less, and more preferably 50 m$^2$/g or greater and 60 m$^2$/g or less.

In an exemplary embodiment of the present application, a particle diameter of the point-like conductive material may be 10 nm to 100 nm, preferably 20 nm to 90 nm, and more preferably 40 nm to 60 nm.

In an exemplary embodiment of the present application, the negative electrode conductive material may include a planar conductive material.

The planar conductive material can serve to improve conductivity by increasing surface contact among silicon particles in the negative electrode, and at the same time, to suppress the disconnection of the conductive path due to the volume expansion, and is used as a concept including as a bulk-type conductive material or a plate-like conductive material.

In an exemplary embodiment of the present application, the planar conductive material may include one or more selected from the group consisting of plate-like graphite, graphene, graphene oxide, and graphite flake, and preferably may be plate-like graphite.

In an exemplary embodiment of the present application, an average particle diameter (D50) of the planar conductive material may be 2 $\mu$m to 7 um, specifically 3 $\mu$m to 6 $\mu$m, and more specifically 4 $\mu$m to 5 $\mu$m. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided the negative electrode active material layer composition in which the planar conductive material has D10 of 0.5 $\mu$m or greater and 1.5 $\mu$m or less, D50 of 2.5 $\mu$m or greater and 3.5 $\mu$m or less, and D90 of 7.0 $\mu$m or greater and 15.0 $\mu$m or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 m$^2$/g or greater.

In another exemplary embodiment, the planar conductive material may have a BET specific surface area of 5 m$^2$/g or greater and 500 m$^2$/g or less, preferably 5 m$^2$/g or greater and 300 m$^2$/g or less, and more preferably 5 m$^2$/g or greater and 300 m$^2$/g or less.

In another exemplary embodiment, the planar conductive material is a planar conductive material with a high specific surface area, and the BET specific surface area may satisfy a range of 50 m$^2$/g or greater and 500 m$^2$/g or less, preferably 80 m$^2$/g or greater and 300 m$^2$/g or less, and more preferably 100 m$^2$/g or greater and 300 m$^2$/g or less.

In another exemplary embodiment, the planar conductive material is a planar conductive material with a low specific surface area, and the BET specific surface area may satisfy a range of 5 m$^2$/g or greater and 40 m$^2$/g or less, preferably 5 m$^2$/g or greater and 30 m$^2$/g or less, and more preferably 5 m$^2$/g or greater and 25 m$^2$/g or less.

Other negative electrode conductive materials may include linear conductive materials such as carbon nanotubes. The carbon nanotubes may be bundle-type carbon nanotubes. The bundle-type carbon nanotubes may include a plurality of carbon nanotube units. Specifically, the term "bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, the negative electrode conductive material may be included in an amount of 10 parts by weight or more and 40 parts by weight or less, on the basis of 100 parts by weight of the negative electrode active material layer composition.

In another exemplary embodiment, the negative electrode conductive material may be included in an amount of 10 parts by weight or more and 40 parts by weight or less, preferably 10 parts by weight or more and 30 parts by weight or less, and more preferably 15 parts by weight or more and 25 parts by weight or less, on the basis of 100 parts by weight of the negative electrode active material layer composition.

The negative electrode conductive material according to the present application has a completely different configuration from a conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the planar conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the negative electrode conductive material is a material having a plane or plate-like shape, and may be expressed as plate-like graphite. That is, the planar conductive material is a material that is included so as to maintain a conductive path in the negative electrode active material layer, and means a material for securing a conductive path in a plane shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

That is, in an exemplary embodiment of the present application, artificial graphite or natural graphite, which is a carbon-based active material, may have a BET specific surface area that satisfies a range of 0.1 $m^2/g$ or greater and 4.5 $m^2/g$ or less. In addition, plate-like graphite, which is a planar conductive material, has a planar shape, and a BET specific surface area thereof may be 5 $m^2/g$ or greater.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylenepropylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The binder according to the exemplary embodiment of the present application serves to hold the negative electrode active material and the negative electrode conductive material in order to prevent distortion and structural deformation of the negative electrode structure when the volume of the silicon-based active material expands and relaxes. When such roles are satisfied, all of the general negative electrode binders can be applied. Specifically, a water-based binder may be used, and more specifically, a PAM-based binder may be used.

In an exemplary embodiment of the present application, the negative electrode binder may be included in an amount of 30 parts by weight or less, preferably 25 parts by weight or less, more preferably 20 parts by weight or less, and 5 parts by weight or more, and 10 parts by weight or more, on the basis of 100 parts by weight of the negative electrode active material layer composition.

In an exemplary embodiment of the present application, the electrode may be a positive electrode, and hereinafter, the method of manufacturing a positive electrode for a lithium secondary battery will be described. Here, the same description as the above-described pre-lithiation method of a negative electrode for a lithium secondary battery may be applied, except the positive electrode.

The method of manufacturing an electrode for a lithium secondary battery according to an exemplary embodiment of the present application may include a step of forming a positive electrode current collector layer and a positive electrode active material layer on one surface or both surfaces of the positive electrode current collector layer.

In an exemplary embodiment of the present application, the positive electrode current collector layer is not particularly limited as long as it has conductivity without causing a chemical change in a battery. For example, stainless steel, aluminum, nickel, titanium, fired carbon, aluminum or stainless steel each surface-treated with carbon, nickel, titanium, silver, or the like, or the like may be used. In addition, the positive electrode current collector layer may typically have a thickness of 3 to 500 $\mu$m, and a surface of the positive electrode current collector layer may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The thickness of the positive electrode current collector layer may be variously modified depending on a type and a use of the negative electrode used, and is not limited thereto.

In an exemplary embodiment of the present application, there is provided the method of manufacturing an electrode for a lithium secondary battery in which the step of forming the positive electrode current collector layer and the positive electrode active material layer on one surface or both surfaces of the positive electrode current collector layer includes a step of coating a positive electrode slurry including a positive electrode active material layer composition on one surface or both surfaces of the positive electrode current collector layer, and in which the positive electrode active material layer composition includes one or more selected from the group consisting of a positive electrode active material, a positive electrode conductive material, and a positive electrode binder.

In an exemplary embodiment of the present application, the above description of the negative electrode slurry may be similarly applied to the positive electrode slurry, except the positive electrode.

In an exemplary embodiment of the present application, the positive electrode active material layer composition may include one or more selected from the group consisting of a positive electrode active material, a positive electrode conductive material, and a positive electrode binder.

In an exemplary embodiment of the present application, there is provided the method for manufacturing an electrode for a lithium secondary battery in which the electrode active material includes one or more selected from the group consisting of Ni, Co, Mn, LTO, LFP, $RuO_2$, $Nb_2O_5$, $Mn_3O_4$, $Fe_2O_3$, and $Co_3O_4$.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.6$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.6$) or $Li_2Mn_3MO_8$ (where M is at least one selected from the group consisting of Fe, Co, Ni, Cu and Zn.); $LiMn_2O_4$ in which a part of Li of the chemical formula is substituted with an alkaline earth metal ion, or the like, but is not limited thereto. The positive electrode may be Li metal.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

In addition, the above description of the negative electrode active material layer composition may be likewise applied to the contents of the positive electrode active material, the positive electrode conductive material, and the positive electrode binder included in the positive electrode active material layer composition.

In an exemplary embodiment of the present application, there is provided the method for manufacturing an electrode for a lithium secondary battery including transferring a lithium metal layer onto the electrode active material layer.

In general, the pre-lithiation process chemically or physically pre-lithiates lithium metal on an electrode, and specifically, may be carried out by a lithium metal transfer process, lithium metal powder deposition, an electrochemical process, or a lithium metal deposition process, and the pre-lithiation process according to the present application may include a lithium metal transfer process.

The lithium metal transfer process has a feature capable of transferring highly reactive lithium metal on top of the electrode active material layer more stably. In this case, a process capable of easily transferring lithium metal from the transfer laminate on top of the electrode active material layer is required.

In an exemplary embodiment of the present application, there is provided the method for manufacturing an electrode for a lithium secondary battery in which the step of transferring the lithium metal layer includes preparing the transfer laminate described above, laminating the transfer laminate onto the electrode active material layer such that a surface of the lithium metal layer opposite to a surface facing the base material layer comes into contact with a surface of the electrode active material layer opposite to a surface in contact with the electrode current collector layer, and removing the base material layer.

In this case, there is provided the method for manufacturing an electrode for a lithium secondary battery in which the laminating is performed at a pressure of 200 kgf/cm$^2$ or lower under a temperature condition of 30°C or lower.

After the lamination step, pre-lithiation of the highly reactive lithium metal and the electrode active material layer may proceed.

In an exemplary embodiment of the present application, there is provided the method for manufacturing an electrode for a lithium secondary battery including pre-lithiating the electrode active material layer after removing the base material layer, in which in the pre-lithiating of the electrode active material layer, the electrode active material layer is pre-lithiated within 30 minutes to 24 hours after transferring the lithium metal.

In the transfer process of a lithium metal layer of the related art, there is a problem in that it is difficult to peel off the base material layer during the progression of pre-lithiation after laminating the transfer laminate. Accordingly, the pre-lithiation progresses without the base material layer being removed, and the heat generated during pre-lithiation is blocked by the base material layer and is not thus dissipated, resulting in formation of by-products on the surface during pre-lithiation of lithium metal. In the pre-lithiation method of an electrode for a lithium secondary battery according to the present application, the base material layer can be easily peeled off immediately after laminating the transfer laminate by adjusting the lithium metal layer within the ranges of Formulas 1 and 2 described above, so that the generation of by-products during pre-lithiation can be suppressed.

There is provided the method for manufacturing an electrode for a lithium secondary battery in which in the pre-lithiating of the electrode active material layer, the electrode active material layer is pre-lithiated within 30 minutes to 24 hours under conditions of 25°C and 1 atm.

The pre-lithiation step is a step of setting a condition for diffusing lithium metal into the electrode active material layer, and whether the pre-lithiation is completed can be determined depending on whether lithium on top of the electrode active material layer has completely disappeared.

An exemplary embodiment of the present application provides a lithium secondary battery including: a positive electrode for a lithium secondary battery; a negative electrode for a lithium secondary battery; a separator provided between the positive electrode and the negative electrode; and an electrolyte, in which at least one of the positive electrode for a lithium secondary battery and the negative electrode for a lithium secondary battery is the electrode for a lithium secondary battery manufactured according to the present application.

In this case, the release layer 35 used during pre-lithiation may be removed as described above, and accordingly, does not remain on top of the electrode, thereby preventing an unnecessary increase in resistance. That is, the release layer improves the transfer force, can be used to protect lithium metal before pre-lithiation, and can be removed before injection of the electrolyte solution.

In an exemplary embodiment of the present application, the electrolyte solution may include an organic liquid electrolyte solution, an inorganic liquid electrolyte, a solid polymer electrolyte, a gel-type polymer electrolyte solution, a solid inorganic electrolyte solution, or a molten-type inorganic electrolyte solution that may be used in the manufacturing of the lithium secondary battery, but is not limited thereto.

Specifically, the electrolyte solution may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte solution for the purpose of improving life characteristics of the battery, suppressing a decrease in battery capacity, improving discharge capacity of the battery, and the like, in addition to the above-described electrolyte solution components.

An exemplary embodiment of the present invention provides a battery module including the lithium secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

Mode for Invention

**<Preparation Examples>**

**<Preparation of Transfer Laminate>**

For Li deposition, Li metal was put into the crucible in the thermal evaporator, a PET base material on which Li was to be deposited was loaded, and then a vacuum up to $10^{-6}$ Torr was formed. Then, Li metal was evaporated while heating the crucible, resulting in deposition of a lithium metal layer on the top of the PET base material at the level of 3 $\mu$m to 10 $\mu$m

(about 6 μm).

After depositing the lithium metal layer, a $CO_2$ gas was injected to cause a lithium carbonate layer to be formed on the surface. After a certain period of time, the vacuum was vented, the sample was taken out and subjected to surface and depth component analysis and transfer evaluation using XPS.

Each transfer laminate was prepared under temperature conditions shown in Table 1 below.

[Table 1]

|  | Surface temperature of PET film on which lithium is to be deposited |
| --- | --- |
| Example 1 | 50 to 60°C |
| Example 2 | 50 to 60°C |
| Example 3 | 70 to 90°C |
| Comparative Example 1 | >100°C |

### XPS Component Analysis (Depth profile)

As regards the transfer laminates prepared above, for XPS component analysis, a sample of approximately 1 cm x 1 cm was prepared, and measurement was performed under conditions of the X-ray spot size of 200 μm and Ar ion energy of 2kV. The etching rate was about 0.55 nm/sec based on $Ta_2O_5$, and this was estimated as the thickness of the Li metal layer and used in the present invention.

For component analysis, a survey scan spectrum was obtained for the as-received sample, and then a narrow scan spectrum was obtained while progressing a depth profile. The depth profile was performed up to 4000 seconds using monatomic Ar ions, and the elemental ratio was calculated from the narrow scan spectrum.

- X-ray source: monochromatic Al Kα (1486.6 eV)
- X-ray spot size: 400 μm for as-received analysis, 200 μm for depth profile
- Sputtering: Ar monatomic (ion energy: 2kV, current: low, raster width: 1mm)
- Etching rate: 0.55 nm/sec based on $Ta_2O_5$
- Operation Mode: CAE (Constant Analyzer Energy) mode
- Survey scan: pass energy 200 eV, energy step 1 eV
- Narrow scan: scanned mode, pass energy 50 eV, energy step 0.1 eV
- Flood gun: off
- SF: Al THERMO1, ECF: TPP-2M, BG subtraction: Shirley 12

Here, there may be a difference from the Li thickness based on $Ta_2O_4$, but the depth profile was determined to be 3000sec => 1650 nm and 10sec => 5.5 nm.

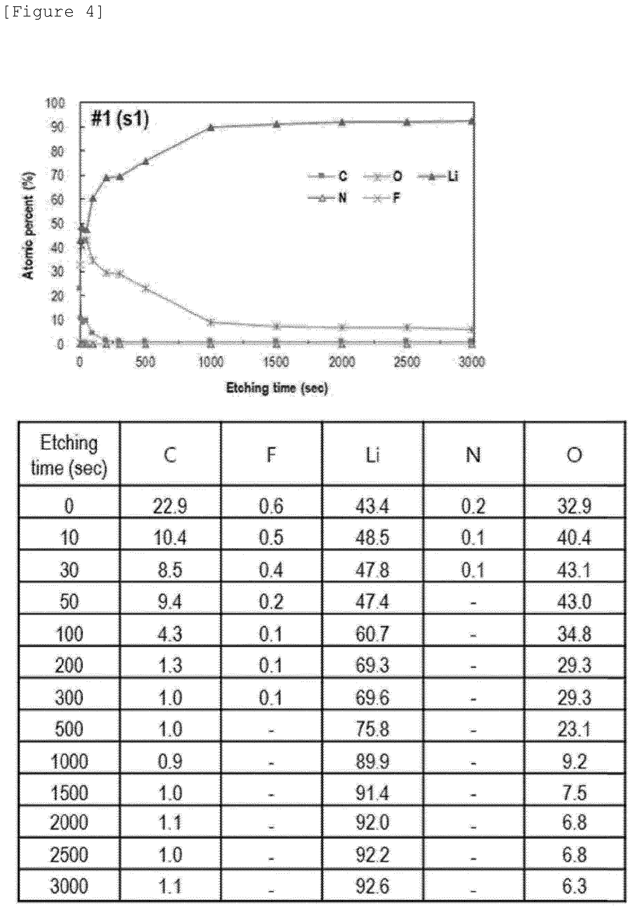

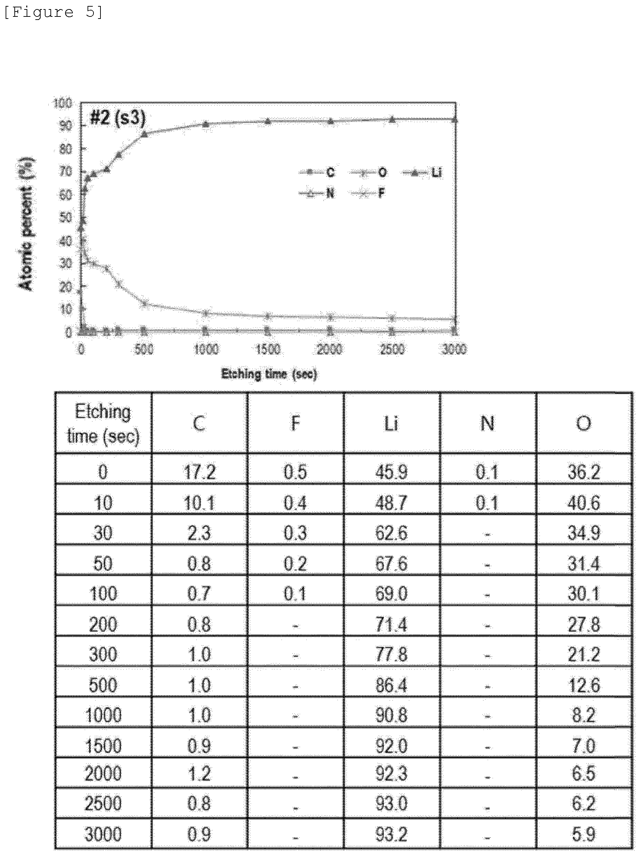

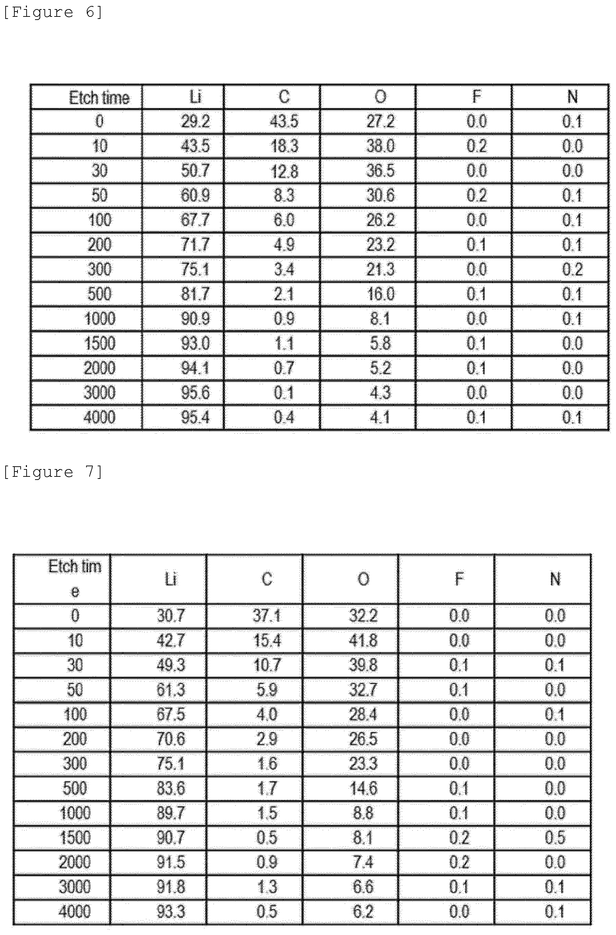

The XPS component analysis results for the transfer laminates in Table 1 are shown in Table 2 below, and the transfer characteristics were evaluated and shown in Table 2 below. FIGS. 4 to 6 show the analysis results of Examples 1 to 3 through actual XPS analysis, and FIG. 7 shows the XPS results of the transfer laminate of Comparative Example 1.

[Table 2]

|  | 10 seconds (5.5 nm) | | | | 3000 seconds (1650 nm) | | | Transfer characteristics |
| --- | --- | --- | --- | --- | --- | --- | --- | --- |
|  | Formul a 1 | Li | O | C | Formul a 2 | Li | O |  |
| Example 1 | 83.30 | 48. 5 | 40. 4 | 10. 4 | 6.80 | 92. 6 | 6. 3 | OK |
| Example 2 | 83.37 | 48. 7 | 40. 6 | 10. 1 | 6.33 | 93. 2 | 5. 9 | OK |
| Example 3 | 87.36 | 43. 5 | 38 | 18. 3 | 4.50 | 95. 6 | 4. 3 | OK |
| Comparativ e Example 1 | 97.89 | 42. 7 | 41. 8 | 15. 4 | 7.19 | 91. 8 | 6. 6 | Fail |

In Table 2, the transfer characteristics were confirmed by placing the transfer laminate on both surfaces of the electrode in order to transfer the transfer electrode body described above, applying a load of about 300 kgf for roll pressing, and then removing the lithium metal layer from PET base material layer in order to confirm whether the sample was transferred. In the case of Examples 1 to 3 of the present application, the surface temperature of the base material layer in the step of forming the lithium metal layer was adjusted to 90°C or lower. According to the characteristics of the manufacturing method, the transfer laminate according to the present application satisfied the range of Formula 1 above in the first region including a thickness of 1 nm or greater and 500 nm or less based on the surface of the lithium metal layer opposite to the surface facing the base material layer, which could be confirmed through Table 2 above. For reference, in Examples 1 and 2, Formulas 1 and 2 were at a similar level, and the surface temperature of the PET film on which lithium was to be deposited was within a range of 50°C to 60°C and the specific temperatures were different, leading to the results as shown in Table 2 above.

Accordingly, it could be confirmed that the transfer laminates of Examples 1 to 3 had the feature of ensuring transferability when later transferred to an electrode by adjusting the ratio of oxygen in the surface of the lithium metal layer. That is, the surface of the lithium metal layer ultimately comes into contact with a surface of a transfer target to which the lithium metal layer is transferred, and in this case, it could be confirmed that by adjusting the ratio of oxygen in the surface, the reactivity issue with the transfer target and the transfer force can be adjusted during transfer, so productivity is secured and transferability can be improved in R2R-type pre-lithiation.

That is, it could be confirmed that the transfer laminate according to the present application adjusts the composition of the lithium metal layer by adjusting the conditions in the manufacturing process, thereby improving lithium transferability during the pre-lithiation process, resulting in suppression of the generation of by-products during the pre-lithiation process.

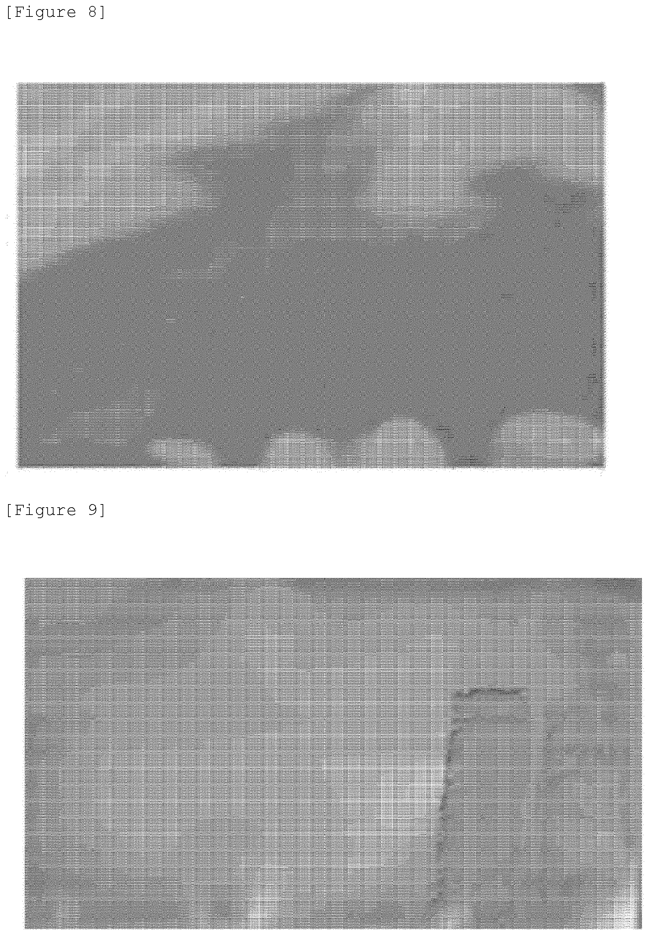

In the case of Comparative Example 1, the surface temperature of the base material layer was too high during the preparation of the transfer laminate, and specifically, as can be seen in FIG. 8, it could be confirmed that the transfer of the lithium metal layer was not performed well.

On the other hand, as can be seen in FIG. 9 (Example 3), it could be confirmed that the transfer characteristics of the lithium metal layer were very excellent when the range of Formula 1 of the present invention was satisfied and the range of Formula 2 was also satisfied.

Specifically, FIGS. 8 and 9 show a criterion for determining the ease of transfer by attaching Nitto-31B tape to the surface, and then checking whether lithium comes off from the PET base material when detaching the tape. FIG. 8 shows that the lithium was not separated from the base material even when the tape was attached and detached, and FIG. 9 shows that lithium was easily peeled off from the base material when the tape was attached and detached. In other words, it could be confirmed that the Example according to the present application has superior transfer characteristics compared to the Comparative Example, and that in the case of Comparative Example 1, the transfer force was low and the result of the transfer evaluation was Fail.

**Claims**

1. A transfer laminate comprising:

   a base material layer; and
   a lithium metal layer stacked on one surface or both surfaces of the base material layer,
   wherein a thickness of the lithium metal layer is 1 $\mu$m or greater and 20 $\mu$m or less, and
   wherein a first region comprising a thickness of 1 nm or greater and 500 nm and less based on a surface of the lithium metal layer opposite to a surface facing the base material layer satisfies Formula 1 below.

$$[Formula\ 1]$$

$$X/Y \times 100\ (\%) \leq 95$$

   in Formula 1 above,

   X refers to an oxygen element ratio (at%) based on 100 of an element content in the first region, and
   Y refers to a lithium element ratio (at%) based on 100 of the element content in the first region.

2. The transfer laminate of claim 1, wherein a second region comprising a thickness of 1500 nm or greater and 1800 nm or less based on the surface of the lithium metal layer opposite to the surface facing the base material layer satisfies Formula 2 below.

$$[Formula\ 2]$$

$$X1/Y1 \times 100\ (\%) \leq 10$$

in Formula 2 above,

X1 refers to an oxygen element ratio (at%) based on 100 of an element content in the second region, and
Y1 refers to a lithium element ratio (at%) based on 100 of the element content in the second region.

3. The transfer laminate of claim 1, wherein the lithium element is included in an amount of 90 wt% or more based on 100 of a metal element content in the lithium metal layer.

4. The transfer laminate of claim 1, wherein the base material layer comprises one or more selected from the group consisting of polyethylene terephthalate (PET), polyimide (PI), poly(methylmethacrylate) (PMMA), polypropylene, polyethylene and polycarbonate.

5. The transfer laminate of claim 1, wherein the base material layer has a thickness of 1 $\mu$m or greater and 300 $\mu$m or less.

6. The transfer laminate of claim 1, wherein a release layer is further included on a surface in contact with the base material layer and the lithium metal layer of the transfer laminate.

7. A method for manufacturing a transfer laminate, the method comprising:

preparing a base material layer; and
forming a lithium metal layer on one surface of the base material layer by heating and depositing a lithium source, wherein a surface temperature of the base material layer in the forming of the lithium metal layer is 90°C or lower.

8. The method of claim 7, further comprising forming a surface protective film on top of the lithium metal layer by using a $CO_2$ gas alone or a mixture of an inert gas and a $CO_2$ gas, after forming the lithium metal layer.

9. The method of claim 7, wherein a deposition process for depositing the lithium metal layer on the base material layer comprises one or more selected from the group consisting of evaporation deposition, chemical vapor deposition (CVD), and physical vapor deposition.

10. The method of claim 7, wherein the lithium metal layer satisfies Formulas 1 and 2 below:

$$[\text{Formula 1}]$$

$$X/Y \times 100 \ (\%) \leq 95$$

in Formula 1 above,

X refers to an oxygen element ratio (at%) based on 100 of an element content in a first region comprising a thickness of 1 nm or greater and 500 nm and less based on a surface of the lithium metal layer opposite to a surface facing the base material layer, and
Y refers to a lithium element ratio (at%) based on 100 of the element content in the first region comprising the thickness of 1 nm or greater and 500 nm and less based on the surface of the lithium metal layer opposite to the surface facing the base material layer, and

$$[\text{Formula 2}]$$

$$X1/Y1 \times 100 \ (\%) \leq 10$$

in Formula 2 above,

X1 refers to an oxygen element ratio (at%) based on 100 of an element content in a second region comprising a thickness of 1500 nm or greater and 1800 nm and less based on the surface of the lithium metal layer opposite to the surface facing the base material layer, and
Y1 refers to a lithium element ratio (at%) based on 100 of the element content in the second region comprising the thickness of 1500 nm or greater and 1800 nm and less based on the surface of the lithium metal layer opposite to the surface facing the base material layer.

11. A method of manufacturing an electrode for a lithium secondary battery, the method comprising:

forming an electrode current collector layer and an electrode active material layer on one surface or both surfaces of the electrode current collector layer; and
transferring a lithium metal layer onto the electrode active material layer,
wherein the transferring of the lithium metal layer comprises preparing the transfer laminate of any one of claims 1 to 6, laminating the transfer laminate onto the electrode active material layer such that a surface of the lithium metal layer opposite to a surface facing the base material layer comes into contact with a surface of the electrode active material layer opposite to a surface in contact with the electrode current collector layer, and removing the base material layer.

12. The method of claim 11, wherein the laminating is performed at a pressure of 200 kgf/cm$^2$ or lower under a temperature condition of 30°C or lower.

13. The method of claim 11, wherein the forming of the electrode current collector layer and the electrode active material layer on one surface or both surfaces of the electrode current collector layer comprises coating an electrode slurry comprising an electrode active material layer composition on one surface or both surfaces of the electrode current collector layer, and
wherein the electrode active material layer composition comprises one or more selected from the group consisting of an electrode active material, an electrode conductive material, and an electrode binder.

14. The method of claim 13, wherein the electrode active material comprises a silicon-based active material, and
wherein the silicon-based active material comprises one or more selected from the group consisting of SiOx (x=0), SiOx (0<x<2), SiC, and a Si alloy.

15. The method of claim 13, wherein the electrode active material comprises one or more selected from the group consisting of Ni, Co, Mn, LTO, LFP, $RuO_2$, $Nb_2O_5$, $Mn_3O_4$, $Fe_2O_3$, and $C_{03}0_4$.

16. A lithium secondary battery comprising:

a positive electrode for a lithium secondary battery;
a negative electrode for a lithium secondary battery;
a separator provided between the positive electrode and the negative electrode; and
an electrolyte,
wherein at least one the positive electrode for a lithium secondary battery and the negative electrode for a lithium secondary battery is the electrode for a lithium secondary battery manufactured according to the method of claim 11.

[Figure 1]

[Figure 2]

[Figure 3]

[Figure 4]

| Etching time (sec) | C | F | Li | N | O |
|---|---|---|---|---|---|
| 0 | 22.9 | 0.6 | 43.4 | 0.2 | 32.9 |
| 10 | 10.4 | 0.5 | 48.5 | 0.1 | 40.4 |
| 30 | 8.5 | 0.4 | 47.8 | 0.1 | 43.1 |
| 50 | 9.4 | 0.2 | 47.4 | - | 43.0 |
| 100 | 4.3 | 0.1 | 60.7 | - | 34.8 |
| 200 | 1.3 | 0.1 | 69.3 | - | 29.3 |
| 300 | 1.0 | 0.1 | 69.6 | - | 29.3 |
| 500 | 1.0 | - | 75.8 | - | 23.1 |
| 1000 | 0.9 | - | 89.9 | - | 9.2 |
| 1500 | 1.0 | - | 91.4 | - | 7.5 |
| 2000 | 1.1 | - | 92.0 | - | 6.8 |
| 2500 | 1.0 | - | 92.2 | - | 6.8 |
| 3000 | 1.1 | - | 92.6 | - | 6.3 |

[Figure 5]

| Etching time (sec) | C | F | Li | N | O |
|---|---|---|---|---|---|
| 0 | 17.2 | 0.5 | 45.9 | 0.1 | 36.2 |
| 10 | 10.1 | 0.4 | 48.7 | 0.1 | 40.6 |
| 30 | 2.3 | 0.3 | 62.6 | - | 34.9 |
| 50 | 0.8 | 0.2 | 67.6 | - | 31.4 |
| 100 | 0.7 | 0.1 | 69.0 | - | 30.1 |
| 200 | 0.8 | - | 71.4 | - | 27.8 |
| 300 | 1.0 | - | 77.8 | - | 21.2 |
| 500 | 1.0 | - | 86.4 | - | 12.6 |
| 1000 | 1.0 | - | 90.8 | - | 8.2 |
| 1500 | 0.9 | - | 92.0 | - | 7.0 |
| 2000 | 1.2 | - | 92.3 | - | 6.5 |
| 2500 | 0.8 | - | 93.0 | - | 6.2 |
| 3000 | 0.9 | - | 93.2 | - | 5.9 |

[Figure 6]

| Etch time | Li | C | O | F | N |
|---|---|---|---|---|---|
| 0 | 29.2 | 43.5 | 27.2 | 0.0 | 0.1 |
| 10 | 43.5 | 18.3 | 38.0 | 0.2 | 0.0 |
| 30 | 50.7 | 12.8 | 36.5 | 0.0 | 0.0 |
| 50 | 60.9 | 8.3 | 30.6 | 0.2 | 0.1 |
| 100 | 67.7 | 6.0 | 26.2 | 0.0 | 0.1 |
| 200 | 71.7 | 4.9 | 23.2 | 0.1 | 0.1 |
| 300 | 75.1 | 3.4 | 21.3 | 0.0 | 0.2 |
| 500 | 81.7 | 2.1 | 16.0 | 0.1 | 0.1 |
| 1000 | 90.9 | 0.9 | 8.1 | 0.0 | 0.1 |
| 1500 | 93.0 | 1.1 | 5.8 | 0.1 | 0.0 |
| 2000 | 94.1 | 0.7 | 5.2 | 0.1 | 0.0 |
| 3000 | 95.6 | 0.1 | 4.3 | 0.0 | 0.0 |
| 4000 | 95.4 | 0.4 | 4.1 | 0.1 | 0.1 |

[Figure 7]

| Etch time | Li | C | O | F | N |
|---|---|---|---|---|---|
| 0 | 30.7 | 37.1 | 32.2 | 0.0 | 0.0 |
| 10 | 42.7 | 15.4 | 41.8 | 0.0 | 0.0 |
| 30 | 49.3 | 10.7 | 39.8 | 0.1 | 0.1 |
| 50 | 61.3 | 5.9 | 32.7 | 0.1 | 0.0 |
| 100 | 67.5 | 4.0 | 28.4 | 0.0 | 0.1 |
| 200 | 70.6 | 2.9 | 26.5 | 0.0 | 0.0 |
| 300 | 75.1 | 1.6 | 23.3 | 0.0 | 0.0 |
| 500 | 83.6 | 1.7 | 14.6 | 0.1 | 0.0 |
| 1000 | 89.7 | 1.5 | 8.8 | 0.1 | 0.0 |
| 1500 | 90.7 | 0.5 | 8.1 | 0.2 | 0.5 |
| 2000 | 91.5 | 0.9 | 7.4 | 0.2 | 0.0 |
| 3000 | 91.8 | 1.3 | 6.6 | 0.1 | 0.1 |
| 4000 | 93.3 | 0.5 | 6.2 | 0.0 | 0.1 |

[Figure 8]

[Figure 9]

# INTERNATIONAL SEARCH REPORT

International application No.

**PCT/KR2023/020497**

## A. CLASSIFICATION OF SUBJECT MATTER

**H01M 4/139**(2010.01)i; **H01M 4/04**(2006.01)i; **H01M 4/1395**(2010.01)i; **H01M 4/1391**(2010.01)i; **H01M 4/38**(2006.01)i; **H01M 4/48**(2010.01)i; **H01M 4/525**(2010.01)i; **H01M 4/58**(2010.01)i

According to International Patent Classification (IPC) or to both national classification and IPC

## B. FIELDS SEARCHED

Minimum documentation searched (classification system followed by classification symbols)

H01M 4/139(2010.01); H01M 10/052(2010.01); H01M 4/134(2010.01); H01M 4/1395(2010.01); H01M 4/36(2006.01); H01M 4/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 전사 (transfer), 리튬 금속(lithium metal), 산소(oxygen), 온도(temperature), 증착(deposition), 전리튬화(prelithiation)

## C. DOCUMENTS CONSIDERED TO BE RELEVANT

| Category* | Citation of document, with indication, where appropriate, of the relevant passages | Relevant to claim No. |
|---|---|---|
| A | KR 10-2021-0029459 A (LG CHEM, LTD.) 16 March 2021 (2021-03-16)<br>See claims 1 and 7; and paragraph [0051]. | 1-16 |
| A | KR 10-2020-0000118 A (LG CHEM, LTD.) 02 January 2020 (2020-01-02)<br>See entire document. | 1-16 |
| A | JP 2010-123582 A (SONY CORP.) 03 June 2010 (2010-06-03)<br>See entire document. | 1-16 |
| A | KR 10-2022-0136277 A (KOREA RESEARCH INSTITUTE OF CHEMICAL TECHNOLOGY) 07 October 2022 (2022-10-07)<br>See entire document. | 1-16 |
| A | KR 10-2020-0000112 A (LG CHEM, LTD.) 02 January 2020 (2020-01-02)<br>See entire document. | 1-16 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 April 2024** | **09 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/020497**

| Patent document cited in search report | | | Publication date (day/month/year) | Patent family member(s) | | | Publication date (day/month/year) |
|---|---|---|---|---|---|---|---|
| KR | 10-2021-0029459 | A | 16 March 2021 | CN | 113826237 | A | 21 December 2021 |
| | | | | EP | 3961764 | A1 | 02 March 2022 |
| | | | | EP | 3961764 | A4 | 03 August 2022 |
| | | | | US | 2022-0223847 | A1 | 14 July 2022 |
| | | | | WO | 2021-045431 | A1 | 11 March 2021 |
| KR | 10-2020-0000118 | A | 02 January 2020 | KR | 10-2448076 | B1 | 26 September 2022 |
| JP | 2010-123582 | A | 03 June 2010 | CN | 101246953 | A | 20 August 2008 |
| | | | | CN | 101246953 | B | 01 December 2010 |
| | | | | CN | 101246953 | C | 20 August 2008 |
| | | | | JP | 2008-270154 | A | 06 November 2008 |
| | | | | JP | 4525742 | B2 | 18 August 2010 |
| | | | | JP | 5310589 | B2 | 09 October 2013 |
| | | | | KR | 10-1481623 | B1 | 12 January 2015 |
| | | | | KR | 10-2008-0071512 | A | 04 August 2008 |
| | | | | US | 2008-0233478 | A1 | 25 September 2008 |
| | | | | US | 8951672 | B2 | 10 February 2015 |
| KR | 10-2022-0136277 | A | 07 October 2022 | WO | 2022-211521 | A1 | 06 October 2022 |
| KR | 10-2020-0000112 | A | 02 January 2020 | KR | 10-2543245 | B1 | 14 June 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220175738

- JP 2009080971 A